# EUROPEAN PATENT SPECIFICATION

(11) **EP 2 987 831 B1**
(45) Date of publication and mention of the grant of the patent: **31.07.2019**
(21) Application number: 13882470.1
(22) Date of filing: 30.10.2013
(51) Int. Cl.: C08L 77/06, C08K 7/14, C08K 9/04, C08J 5/08

(54) **POLYAMIDE-BASED RESIN COMPOSITION HAVING EXCELLENT FLEXURAL MODULUS AND IMPACT STRENGTH**
POLYAMIDBASIERTE HARZZUSAMMENSETZUNG MIT HERVORRAGENDEM ELASTIZITÄTSMODUL UND SCHLAGFESTIGKEIT
COMPOSITION DE RÉSINE À BASE DE POLYAMIDE AYANT UN EXCELLENT MODULE D'ÉLASTICITÉ EN FLEXION ET UNE EXCELLENTE RÉSISTANCE AU CHOC

(30) Priority: 18.04.2013 KR 20130042662
(43) Date of publication of application: 24.02.2016
(73) Proprietor: Lotte Advanced Materials Co., Ltd., Yeosu-si Jeollanam-do (KR)
(72) Inventor: HAN, Jae Hyun, Uiwang-si Gyeonggi-do 437-711 (KR); WOO, Eun Taek, Uiwang-si Gyeonggi-do 437-711 (KR); KIM, Jung Ki, Uiwang-si Gyeonggi-do 437-711 (KR); LIM, Jong Cheol, Uiwang-si Gyeonggi-do 437-711 (KR)
(74) Representative: Michalski Hüttermann & Partner Patentanwälte mbB
(86) International application number: PCT/KR2013/009700
(87) International publication number: WO 2014/171601

(56) References cited:
- KR-A- 880 012 708
- KR-A- 19980 021 935
- KR-A- 20100 024 170
- KR-A- 20100 050 249
- US-A- 4 612 222
- US-A- 5 166 247
- US-A1- 2010 256 262
- US-A1- 2013 022 786

## Description

The present invention relates to a polyamide-based resin composition. More particularly, the present invention relates to an aliphatic polyamide-based resin composition having excellent flexural modulus and impact strength.

Polyamide-based resins are a representative engineering plastic. In order to increase mechanical rigidity and heat resistance, inorganic reinforcements such as glass fiber are added to polyamide-based resins. Such mixed resins are broadly used in a variety of fields such as interior/exterior materials of vehicles, components of electronic products, interior/exterior materials of mobile phones, etc.

US 2013/022786 A1 refers to resin compositions comprising at least one amorphous semi-aromatic polyamide, at least one semi-crystalline polyamide, and at least one glass reinforcement agent wherein the composition has a good balance of properties in terms of good mechanical properties, excellent surface appearance, and chemical resistance. This invention also relates to the use of such polyamide resins to manufacture device housings.

US 2010/256262 A1 refers to a resin composition including a thermoplastic resin (A), a glass fiber (B) having a ratio of the major axis to the minor axis of the fiber cross section of 1.5 to 10 and a flame retardant (C), wherein the mass ratio (A/B) of the thermoplastic resin (A) to the glass fiber (B) is 30/70 to 95/5, and a part or the whole of the thermoplastic resin (A) is composed of a polyamide resin (A1a) or/and a polyamide resin (A1b); and the resin composition includes 10 parts by mass or more of the polyamide resin (A1a) or/and the polyamide resin (A1b) and 5 to 40 parts by mass of the flame retardant (C) in relation to 100 parts by mass of the total amount of the thermoplastic resin (A) and the glass fiber (B).

In order to increase rigidity of polyamide-based resins, inorganic fillers such as glass fiber, carbon fiber, etc. are generally added. However, when large amounts of inorganic fillers are added to increase rigidity, rigidity of polyamide-based resins is increased, but impact strength and fluidity of the polyamide-based resins are decreased.

More particularly, when regular impact is continuously applied to polyamide-based resins, stress is accumulated at interfaces between polyamide molecules and inorganic fillers due to low interfacial binding force between the polyamide-based resins and the inorganic fillers. Accordingly, cracks are generated from interfaces and thus impact strength is decreased. In addition, the added inorganic fillers disturb flow of molten resins, thereby decreasing fluidity.

In order to prevent such impact strength decrease, rubber ingredients may be added to polyamide-based resins. However, when the rubber ingredients are added, fluidity and mechanical characteristics are deteriorated.

Conventionally, rigidity and impact strength of polyamide-based resin compositions were improved by controlling the contents of inorganic fillers or shapes of inorganic fillers. When carbon fiber, as a representative inorganic filler, is used, flexural modulus is superior, but impact strength is decreased and costs are high.

Accordingly, in order to address such problems, the present inventors developed a polyamide-based resin composition having excellent flexural modulus and impact strength, using an aliphatic polyamide resin having 16 to 24 carbon atoms and glass fiber having a fibrous shape and a ratio of a short axis to a long axis of 1:2 to 1:6 in cross section.

Therefore, the present invention has been made in view of the above problems, and it is an object of the present invention to provide a polyamide-based resin composition having an excellent flexural modulus.

It is another object of the present invention to provide a polyamide-based resin composition having excellent impact strength.

It is yet another object of the present invention to provide a molded product molded from a polyamide-based resin composition having excellent flexural modulus and impact strength.

The above and other objects can be accomplished by the present invention described below.

In accordance with an aspect of the present invention, the above and other objects can be accomplished by the provision of a polyamide-based resin composition in according with claim 1 comprising: (A) 20 to 60% by weight of an aliphatic polyamide resin; and (B) 40 to 80% by weight of a glass fiber having a fibrous shape and a ratio of a short axis to a long axis of 1:2 to 1:6 in cross section, wherein the aliphatic polyamide resin (A) is selected from the group consisting of nylon 610, nylon 611, nylon 612, nylon 1010, nylon 1011, nylon 1111, nylon 1112, nylon 1212 and mixtures thereof, wherein the glass fiber (B) is surface-treated with at least one coupling agent selected from the group consisting of urethane-based coupling agents, silane-based coupling agents and epoxy-based coupling agents, a molded product molded from the polyamide-based resin composition has a flexural modulus (FM) measured according to an ASTM D790 standard is 12 to 25 GPa, an Izod impact strength measured according to an ASTM D256 standard is 117.6 to 245 J/m, and a falling dart impact (FDI Peak Energy) measured by dropping a 5 kg weight from a 1 m height onto a specimen of 10 cm × 10 cm × 3.2 mm is 3 to 7 J.

The aliphatic polyamide resin (A) is selected from the group consisting of nylon 610, nylon 611, nylon 612, nylon 1010, nylon 1011, nylon 1111, nylon 1112, nylon 1212 or a mixture thereof.

The aliphatic polyamide resin (A) has a melting point of 160 to 230 °C

The glass fiber (B) may be surface-treated with a urethane-based coupling agent, a silane-based coupling agent, an epoxy-based coupling agent or a mixture thereof.

The polyamide-based resin composition may further comprise at least one additive (C), for example, a thermal stabilizer, a lubricant, a releasing agent, a dispersing agent, an anti-dripping agent, a weather stabilizer, an inorganic filler, an inorganic fiber or a mixture thereof.

The additive (C) may be comprised in an amount of 0.1 to 10 parts by weight based on 100 parts by weight of the aliphatic polyamide resin (A) and the glass fiber (B).

A molded product according to the present invention is molded from the polyamide-based resin composition according to the present invention.

Hereinafter, the present invention is described in more detail below.

As described above, a polyamide-based resin composition according to the present invention has excellent flexural modulus and impact strength.

The present invention relates to an aliphatic polyamide-based resin composition, more particularly an aliphatic polyamide-based resin having excellent flexural modulus and impact strength by using an aliphatic polyamide-based resin having 16 to 24 carbon atoms and flat-shape glass fiber.

The polyamide-based resin composition according to the present invention comprises (A) 20 to 60% by weight of an aliphatic polyamide; and (B) 40 to 80% by weight of a glass fiber having a fibrous shape and a ratio of a short axis to a long axis of 1:2 to 1:6 in cross section, wherein the aliphatic polyamide resin (A) is selected from the group consisting of nylon 610, nylon 611, nylon 612, nylon 1010, nylon 1011, nylon 1111, nylon 1112, nylon 1212 and mixtures thereof, wherein the glass fiber (B) is surface-treated with at least one coupling agent selected from the group consisting of urethane-based coupling agents, silane-based coupling agents and epoxy-based coupling agents, a molded product molded from the polyamide-based resin composition has a flexural modulus (FM) measured according to an ASTM D790 standard is 12 to 25 GPa, an Izod impact strength measured according to an ASTM D256 standard is 117.6 to 245 J/m, and a falling dart impact (FDI Peak Energy) measured by dropping a 5 kg weight from a 1 m height onto a specimen of 10 cm × 10 cm × 3.2 mm is 3 to 7 J.

### (A) Aliphatic polyamide resin

In the polyamide-based resin composition according to the present invention, an aliphatic polyamide resin (A) prepared according to methods known to those having ordinary skill in the art or commercially available may be used without limitation. When an aromatic polyamide resin is used, mechanical properties such as impact strength and flexural modulus of a final polyamide-based resin composition may be decreased. Accordingly, the aliphatic polyamide resin may be used alone.

The aliphatic polyamide resin (A) has 16 to 24 carbon atoms. An amide binding number increases with decreasing polyamide resin chain length. With increasing amide binding number, hydrogen bonding sites may increase in number and thus hydrogen bonding between chains is performed, thereby decreasing impact strength of a polyamide-based resin composition.

A melting point of the aliphatic polyamide resin (A) having 16 to 24 carbon atoms is preferably 160 to 230 °C. Hydrogen bonding sites may be decreased with decreasing chain length of a polyamide resin, thereby decreasing melting point.

The aliphatic polyamide resin (A) is prepared through condensation of an aliphatic diamine having six or more carbon atoms and an aliphatic carboxylic acid having 10 or more carbon atoms. Examples of the aliphatic carboxylic acid monomer forming the aliphatic polyamide resin include sebacic acid, decanoic acid, dodecanedioic acid and tetradecanedioic acid, and examples of the aliphatic diamine monomer include hexamethylenediamine, octamethylenediamine, decamethylenediamine, 2-methylpentamethylenediamine, 2-ethyltetramethylenediamine, 2-methyloctamethylenediamine and trimethylhexamethylene diamine.

As the aliphatic polyamide resin (A), nylon 610, nylon 611, nylon 612, nylon 1010, nylon 1011, nylon 1111, nylon 1112, nylon 1212 or a mixture thereof is used.

Some diamines having 10 or more carbon atoms and carboxylic acid are biomaterials that may be extracted from plants, thus being eco-friendly.

In the present invention, the aliphatic polyamide resin (A) may be comprised in an amount of 20 to 60% by weight based on 100% by weight of the aliphatic polyamide resin (A) and the glass fiber (B). When the content of the aliphatic polyamide resin (A) is less than 20% by weight, fluidity is decreased. When the content of the aliphatic polyamide resin (A) is greater than 60% by weight, impact strength may be decreased.

### (B) Glass fiber

In the polyamide-based resin composition according to the present invention, a glass fiber (B) prepared according to methods known to those having ordinary skill in the art or commercially available may be used without limitation.

The glass fiber (B) has a fibrous shape. When a plate-shape, egg-shape or globular glass fiber is used, impact resistance is decreased. When the glass fiber (B) has a fibrous shape with a constant thickness and shape, glass fiber is arranged in a regular direction upon injection molding and thus resistance against external impact may be increased.

A ratio of a short axis to a long axis in a cross section of the glass fiber (B) may be 1:2 or more, particularly 1:2 to 1:6, more particularly 1:2 to 1:4, and the cross section may have a flat shape. In this case, impact resistance against external impact and flexural properties become superior.

An average length of the glass fiber (B) may be 2 to 6 mm, particularly 2 to 4 mm. In general, with increasing glass fiber length, impact resistance becomes superior, but appearance becomes poor due to glass fiber protruding to a surface. Accordingly, in order to realize superior balance among flexural modulus, impact resistance and appearance, an average length of glass fiber is included within the range.

In addition, in the cross section of the glass fiber (B), an average length of the short axis may be 5 to 9 µm and an average length of the long axis may be 10 to 36 µm. Particularly, the average length of the short axis may be 7 µm and the average length of the long axis may be 28 µm.

The glass fiber (B) may be surface-treated to inhibit reaction with the aliphatic polyamide resin (A) and to enhance binding force. Mechanical properties of the polyamide-based resin composition may be controlled depending upon a material with which the glass fiber (B) is surface-treated.

Non-limiting examples of the material with which the glass fiber (B) is surface-treated include organic coupling agents such as urethane-based coupling agents, silane-based coupling agents and epoxy-based coupling agents. Particularly, urethane-based coupling agents having good affinity to the aliphatic polyamide resin (A) may be used. For the surface treatment, general coating methods such as dip coating, spray coating, etc. may be used without limitation.

In the present invention, the glass fiber (B) may be comprised in an amount of 40 to 80% by weight based on 100% by weight of the aliphatic polyamide resin (A) and the glass fiber (B). When the content of the glass fiber (B) is less than 40% by weight, impact strength is decreased. When the content of the glass fiber (B) is greater than 80% by weight, fluidity and moldability may be decreased.

### (C) Additive

The present invention may further comprise the additive (C) depending upon respective use of the polyamide-based resin composition.

The polyamide-based resin composition may further comprise a thermal stabilizer, a lubricant, a releasing agent, a dispersing agent, an anti-dripping agent, a weather stabilizer, an inorganic filler, an inorganic fiber, or a mixture thereof.

The additive (C) may be further comprised in an amount of 10 parts by weight or less, particularly 0.1 to 10 parts by weight, based on 100 parts by weight of the aliphatic polyamide resin (A) and the glass fiber (B).

The molded product according to the present invention may be manufactured according to a publicly known molded product manufacturing method. For example, constituents and other additives of the present invention are mixed at the same time and then melt-extruded in an extruder, resulting in a pellet or chip-shape molded product.

The molded product according to the present invention may have a flexural modulus (FM) of 12 to 25 GPa, which is measured according to ASTM D790.

The molded product having a thickness of 1/4" according to the present invention may have an impact strength of 117.6 to 245 J/m, which is measured at 23 °C according to an ASTM D256.

The molded product according to the present invention may have a falling dart impact (FDI Peak Energy) of 3 to 7 J which is measured by dropping a 5 kg weight from a 1 m height onto a specimen of 10 cm × 10 cm × 3.2 mm using a CEAST FRACTOVIS PLUS available from INSTRON.

Now, the present invention is described in more detail with reference to the following examples. These examples are provided only for illustration of the present invention and should not be construed as limiting the scope and spirit of the present invention.

### Examples and Comparative Examples

Ingredients used in Examples and Comparative Examples are as follows.

### (A) Polyamide resin

(A1) Hiprolon200 (melting point: 200 °C) as PA1010 available from Arkema was used.
(A2) ZYTEL 101F (melting point: 270 °C) as PA66 available from DuPont was used.
(A3) TP 4208 (melting point: 220 °C) as PA6 available from Zigsheng was used.
(A4) TGP 3567 (melting point: 300 °C) as PA10T available from Evonik was used.

### (B) Glass fiber

(B1) CSG 3PA 820 available from Nittobo Boseki was used. Here, a ratio of a short axis to a long axis in a cross section was 1:4, and glass fiber surface-treated with a polyurethane-based coupling agent was used.
(B2) 183F available from Owenscorning was used. Here, a ratio of a short axis to a long axis in a cross section was 1:1, and glass fiber surface-treated with an epoxy-based coupling agent was used.

### (C) Thermoplastic elastomer

Tuftec M1913 as maleic anhydride-grafted styrene-ethylene-butylene-styrene (SEBS) available from Asahi Kasei was used.

### (D) Additive

Sulilzer GA 80 as a thermal stabilizer available from Sumitomo Chemical was used, and ethylene bis(stearate) as a lubricant was used. Such additives were used in an amount of 0.5 parts by weight based on 100 parts by weight of the polyamide resin (A) and the glass fiber (B). Here, a ratio of the thermal stabilizer to the lubricant was 1:2.

### Examples 1 to 4 and Comparative Examples 1 to 8

According to compositions of Tables 1 and 2 below, each ingredient, a thermal stabilizer and a lubricant were mixed in a general mixer. Subsequently, a resultant mixture was input to a twin-screw extruder with L/D of 35 and ø of 45 mm, thereby preparing a pellet-shape thermoplastic resin composition. A resultant pellet was dried in a 100 °C hot-air dryer for four hours, and then a specimen for property evaluation was manufactured at an injection temperature of 300 °C using a 15 oz. injection machine. A resultant specimen was stood under a relative humidity of 50% at 23 °C for 48 hours and then properties thereof were measured according to the measurement methods.

In tables below, mix ratios of (A), (B), (C) and (D) are represented by "% by weight" based on 100% by weight of (A) and (B), and (C) and (D) are represented by "parts by weight" based on 100 parts by weight of (A) and (B).

**[Table 1]**

| | | Examples | | | |
|---|---|---|---|---|---|
| | | 1 | 2 | 3 | 4 |
| (A) | (A1) | 60 | 50 | 40 | 30 |
| | (A2) | - | - | - | - |
| | (A3) | - | - | - | - |
| | (A4) | - | - | - | - |
| (B) | (B1) | 40 | 50 | 60 | 70 |
| | (B2) | - | - | - | - |
| (C) | | - | - | - | - |
| (D) | | 0.5 | 0.5 | 0.5 | 0.5 |

**[Table 2]**

| | | Comparative Examples | | | | | | | |
|---|---|---|---|---|---|---|---|---|---|
| | | 1 | 2 | 3 | 4 | 5 | 6 | 7 | 8 |
| (A) | (A1) | - | - | - | - | 20 | - | 70 | 50 |
| | (A2) | 50 | 50 | 60 | - | 30 | - | - | - |
| | (A3) | - | - | - | 50 | - | - | - | - |
| | (A4) | - | - | - | - | - | 50 | - | - |
| (B) | (B1) | 50 | 50 | 40 | 50 | 50 | 50 | 30 | - |
| | (B2) | - | - | - | - | - | - | - | 50 |
| (C) | | - | 0.5 | - | - | - | - | - | - |
| (D) | | 0.5 | 0.5 | 0.5 | 0.5 | 0.5 | 0.5 | 0.5 | 0.5 |

Properties of manufactured specimens were measured according to methods below. Results are summarized in Tables 3 and 4.
(1) Flexural modulus (GPa): Was measured at a speed of 2.8 mm/min according to ASTM D790.
(2) Specific gravity: Was measured according to ASTM D792.
(3) Izod impact strength (J/m): Was measured at 23 °C according to ASTM D256 using specimens having a thickness of 1/4".
(4) Falling dart impact (FDI Peak Energy, J): Was measured by dropping a 5 kg weight from a 1 m height onto specimens having a size of 10 cm × 10 cm × 3.2 mm using CEAST FRACTOVIS PLUS available from INSTRON.

**[Table 3]**

| | Examples | | | |
|---|---|---|---|---|
| | 1 | 2 | 3 | 4 |
| Flexural modulus | 14.3 | 15.2 | 16.0 | 17.8 |
| Specific gravity | 1.32 | 1.43 | 1.62 | 1.75 |
| Izod impact strength | 140.2 | 154.9 | 172.6 | 178.5 |
| Falling dart impact | 4.86 | 4.31 | 4.02 | 3.23 |

**[Table 4]**

| | Comparative Examples | | | | | | | |
|---|---|---|---|---|---|---|---|---|
| | 1 | 2 | 3 | 4 | 5 | 6 | 7 | 8 |
| Flexural modulus | 13.5 | 13.1 | 11.8 | 11.3 | 12.5 | 13.6 | 11.2 | 13.1 |
| Specific gravity | 1.57 | 1.57 | 1.40 | 1.56 | 1.53 | 1.58 | 1.31 | 1.43 |
| Izod impact strength | 122.6 | 131.4 | 115.7 | 107.9 | 137.3 | 107.9 | 112.8 | 140.2 |
| Falling dart impact | 2.33 | 2.67 | 2.18 | 1.88 | 2.89 | 2.12 | 2.53 | 3.76 |

As shown in Table 3, when the aliphatic polyamide resin (A) and the glass fiber (B) included in the scope of the present invention are used, excellent flexural modulus and impact strength are exhibited. With increasing content of the glass fiber (B), flexural modulus and Izod impact strength are increased, but falling dart impact is decreased.

As shown in Table 4, in Comparative Examples 1 to 4 and 6 in which the aliphatic polyamide resin (A) is not used, flexural modulus and impact strength are decreased, and, particularly, impact strength is remarkably decreased. In Comparative Example 5 in which the aliphatic polyamide resin (A) and the aromatic polyamide resin are used together, impact strength is decreased.

In Comparative Example 7 in which the globular glass fiber is used and Comparative Example 8 in which a small amount of the glass fiber is used, impact strength is decreased, when compared to Example 2 in which the flat-shape glass fiber is used.

The preferred embodiments of the present invention have been disclosed for illustrative purposes.

## Claims

1. A polyamide-based resin composition comprising: (A) 20 to 60% by weight of an aliphatic polyamide resin; and (B) 40 to 80% by weight of a glass fiber having a fibrous shape and a ratio of a short axis to a long axis of 1:2 to 1:6 in cross section, wherein the aliphatic polyamide resin (A) is selected from the group consisting of nylon 610, nylon 611, nylon 612, nylon 1010, nylon 1011, nylon 1111, nylon 1112, nylon 1212 and mixtures thereof, wherein the glass fiber (B) is surface-treated with at least one coupling agent selected from the group consisting of urethane-based coupling agents, silane-based coupling agents and epoxy-based coupling agents, a molded product molded from the polyamide-based resin composition has a flexural modulus (FM) measured according to an ASTM D790 standard is 12 to 25 GPa, an Izod impact strength measured according to an ASTM D256 standard is 117.6 to 245 J/m, and a falling dart impact (FDI Peak Energy) measured by dropping a 5 kg weight from a 1 m height onto a specimen of 10 cm × 10 cm × 3.2 mm is 3 to 7 J.

2. The polyamide-based resin composition according to claim 1, wherein the polyamide-based resin composition further comprises at least one additive (C) selected from the group consisting of a thermal stabilizer, a lubricant, a releasing agent, a dispersing agent, an anti-dripping agent, a weather stabilizer, an inorganic filler and an inorganic fiber.

3. The polyamide-based resin composition according to claim 2, further comprising 0.1 to 10 parts by weight of the additive (C) based on 100 parts by weight of the aliphatic polyamide resin (A) and the glass fiber (B).

## Patentansprüche

1. Polyamidbasierte Harzzusammensetzung, umfassend: (A) 20 bis 60 Gew.-% eines aliphatischen Polyamidharzes und (B) 40 bis 80 Gew.-% einer Glasfaser mit einer faserigen Form und einem Verhältnis von einer kurzen Achse zu einer langen Achse von 1:2 bis 1:6 im Querschnitt, wobei das aliphatische Polyamidharz (A) aus der Gruppe bestehend aus Polyamid 610, Polyamid 611, Polyamid 612, Polyamid 1010, Polyamid 1011, Polyamid 1111, Polyamid 1112, Polyamid 1212 und Mischungen davon ausgewählt ist, wobei die Glasfaser (B) mit mindestens einem Haftvermittler aus der Gruppe bestehend aus urethanbasierten Haftvermittlern, silanbasierten Haftvermittlern und epoxidbasierten Haftvermittlern ausgewählt ist und ein aus der polyamidbasierten Harzzusammensetzung geformter Formkörper einen gemäß ASTM-Norm D790 gemessenen Biegemodul (FM) von 12 bis 25 GPa, eine gemäß ASTM-Norm D256 gemessene Izod-Schlagzähigkeit von 117,6 bis 245 J/m und einen durch Fallenlassen eines 5-kg-Gewichts aus einer Höhe von 1 m auf einen Prüfkörper mit den Abmessungen 10 cm × 10 cm × 3,2 cm gemessenen Falling Dart Impact (FDI Peak Energy) von 3 bis 7 J aufweist.

2. Polyamidbasierte Harzzusammensetzung nach Anspruch 1, wobei die polyamidbasierte Harzzusammensetzung ferner mindestens ein Additiv (C) aus der Gruppe bestehend aus einem Wärmestabilisator, einem Schmiermittel, einem Trennmittel, einem Dispergiermittel, einem Antitropfmittel, einem Witterungsstabilisator, einem anorganischen Füllstoff und einer anorganischen Faser umfasst.

3. Polyamidbasierte Harzzusammensetzung nach Anspruch 2, ferner umfassend 0,1 bis 10 Gewichtsteile des Additivs (C), bezogen auf 100 Gewichtsteile des aliphatischen Polyamidharzes (A) und der Glasfaser (B) .

## Revendications

1. Composition de résine à base de polyamide comprenant : (A) 20 jusqu'à 60% en poids d'une résine de polyamide aliphatique ; et (B) 40 jusqu'à 80% en poids d'une fibre de verre possédant une forme fibreuse et un rapport d'une largeur à une longueur de 1:2 jusqu'à 1:6 en section transversale, la résine (A) de polyamide aliphatique étant choisie dans le groupe constitué par le nylon 610, le nylon 611, le nylon 612, le nylon 1010, le nylon 1011, le nylon 1111, le nylon 1112, le nylon 1212 et les mélanges correspondants, la fibre de verre (B) étant traitée en surface par au moins un agent de couplage choisi dans le groupe constitué par les agents de couplage à base d'uréthane, les agents de couplage à base de silane et les agents de couplage à base d'époxy, un produit moulé, moulé à partir de la composition de résine à base de polyamide possédant un module de flexion (FM) mesuré selon une méthode standard ASTM D790 étant de 12 jusqu'à 25 GPa, une résistance au choc izod mesurée selon une méthode standard ASTM D256 étant de 117,6 jusqu'à 245 J/m et un impact par chute libre d'un poinçon (pic d'énergie FDI) mesuré en laissant tomber un poids de 5 kg d'une hauteur de 1 m sur une éprouvette de 10 cm x 10 cm x 3,2 mm étant de 3 jusqu'à 7 J.

2. Composition de résine à base de polyamide selon la revendication 1, la composition de résine à base de polyamide comprenant en outre au moins un additif (C) choisi dans le groupe constitué par un stabilisateur thermique, un lubrifiant, un agent de libération, un agent dispersant, un agent anti-bavure, un stabilisateur contre les intempéries, une charge inorganique et une fibre inorganique.

3. Composition de résine à base de polyamide selon la revendication 2, comprenant en outre 0,1 jusqu'à 10 parties en poids de l'additif (C) sur la base de 100 parties en poids de la résine de polyamide aliphatique (A) et de la fibre de verre (B).
